(19) **Europäisches Patentamt**

**European Patent Office**

**Office européen des brevets**

(11) **EP 0 666 791 B2**

(12) **NEUE EUROPÄISCHE PATENTSCHRIFT**

(45) Veröffentlichungstag und Bekanntmachung des Hinweises auf die Entscheidung über den Einspruch:
**13.09.2000 Patentblatt 2000/37**

(45) Hinweis auf die Patenterteilung:
**16.04.1997 Patentblatt 1997/16**

(21) Anmeldenummer: **93922510.8**

(22) Anmeldetag: **01.10.1993**

(51) Int. Cl.[7]: **B29C 45/17**

(86) Internationale Anmeldenummer:
**PCT/EP93/02694**

(87) Internationale Veröffentlichungsnummer:
**WO 94/08773 (28.04.1994 Gazette 1994/10)**

(54) **VERFAHREN ZUM SPRITZGIESSEN VON FORMTEILEN AUS THERMOPLASTISCHEM KUNSTSTOFFMATERIAL SOWIE WERKZEUG ZUR DURCHFÜHRUNG DESSELBEN**

PROCESS FOR INJECTION MOLDING OF PRODUCTS FROM THERMOPLASTIC MATERIAL AND TOOL FOR CARRYING OUT SAME

PROCEDE DE MOULAGE PAR INJECTION DE PIECES EN MATIERE THERMOPLASTIQUE ET OUTIL PERMETTANT LA MISE EN OEUVRE DUDIT PROCEDE

(84) Benannte Vertragsstaaten:
**AT BE CH DE DK ES FR GB IE IT LI LU NL SE**

(30) Priorität: **08.10.1992 DE 4233927**
**22.10.1992 DE 4235664**

(43) Veröffentlichungstag der Anmeldung:
**16.08.1995 Patentblatt 1995/33**

(73) Patentinhaber: **Battenfeld GmbH**
**D-58540 Meinerzhagen (DE)**

(72) Erfinder:
- **ECKARDT, Helmut**
  **D-58540 Meinerzhagen (DE)**
- **EHRITT, Jürgen**
  **D-57271 Hilchenbach (DE)**
- **LÜSEBRINK, Klaus**
  **D-58540 Meinerzhagen (DE)**
- **RENGER, Michael**
  **D-58540 Meinerzhagen (DE)**

(74) Vertreter:
**Müller, Gerd, Dipl.-Ing.**
**Patentanwälte**
**Hemmerich-Müller-Grosse**
**Pollmeier-Valentin-Gihske**
**Hammerstrasse 2**
**57072 Siegen (DE)**

(56) Entgegenhaltungen:
**EP-A- 0 321 117**     **EP-A- 0 393 315**
**WO-A-90/00466**      **WO-A-91/04146**
**DE-A- 3 734 164**     **DE-C- 3 917 366**
**GB-A- 2 202 181**     **US-A- 4 824 732**
**US-A- 5 204 050**

- **PATENT ABSTRACTS OF JAPAN vol. 16, no. 471 (M-1318)30. September 1992 & JP,A,04 168 017 (NIPPON PLAST) 16. Juni 1992**

EP 0 666 791 B2

**Beschreibung**

Die Erfindung betrifft ein Verfahren zum Spritzgießen von mit ihren Wandungen einen Hohlraum einschließenden Formteilen aus thermoplastischem Kunststoffmaterial, bei welchem die Kunststoffschmelze mit vorgegebener Menge in die Kavität eines Formwerkzeuges eingespritzt wird sowie währenddessen und/oder anschließend mit einem fluidischen Druckmedium, insbesondere Gas beaufschlagt wird, damit die Kunststoffschmelze sich unter Hohlraumbildung längs der Wandungen der Kavität verteilt und an diese anlegt.

Die Erfindung betrifft aber auch ein Formwerkzeug zur Durchführung dieses Verfahrens, bei dem fluidisches Druckmedium, insbesondere Gas, durch die an die Angußöffnung angelegte Spritzdüse des Spritzaggregates oder durch eine dieser Angußöffnung benachbarte Einspritzeinheit in die Kavität desselben eingeführt werden kann.

Das Spritzgießen von Formteilen erfolgt oft in der Weise, daß in die Kavität eines mit ihrer Angußöffnung an die Spritzdüse eines Spritzaggregates angelegten Formwerkzeuges eine auf das jeweilige Formteil-Volumen abgestimmte Menge der thermoplastischen Kunststoffschmelze eingebracht und dabei bzw. daraufhin die Kavität zusätzlich mit einem fluidischen Druckmedium, insbesondere Gas, beaufschlagt wird.

Diese Verfahrensart bezweckt die Herstellung von Formteilen, die bei einer relativ großen Außenabmessung aus einer möglichst geringen Menge von Kunststoffmaterial gefertigt werden sollen und deshalb in ihrem Inneren einen Hohlraum einschließen.

Dabei ist es wichtig, daß die Formteile in Abhängigkeit von ihrer Geometrie und von dem zu ihrer Herstellung benutzten Kunststoffmaterial eine bestimmte Wanddickenverteilung erhalten, damit auch ihre für den jeweiligen Einsatzzweck notwendige Stabilität gewährleistet ist.

Bei den üblicherweise gegebenen Herstellungsbedingungen ist die Einflußnahme auf die Wanddicke, und zwar insbesondere die Mindestwanddicke, der Formteile nur gering. Das heißt, die Temperatur des thermoplastischen Kunststoffmaterials, die Werkzeug-Wandtemperatur, die Einspritzgeschwindigkeit und der Druck des in der Kavität des Formwerkzeuges auf das thermoplastische Kunststoffmaterial zur Einwirkung gebrachten fluidischen Druckmedium, insbesondere Gas, können die optimale Wanddickenverteilung und auch die Mindestwanddicke an den kritischen Stellen des jeweiligen Formteils nicht garantieren.

Oft besteht jedoch eine Notwendigkeit bzw. ein Zwang, Kunststoff-Formteile zu fertigen, bei denen die Mindestwanddicke in bestimmten Bereichen auf keinen Fall unterschritten werden darf, insbesondere dann, wenn diese Bereiche festigkeitsmäßig einer hohen Belastung unterliegen.

Die Herstellung solcher Formteile erfolgte bisher in der Weise, daß die Kavität bzw. das Formnest des Formwerkzeuges zunächst vollständig mit der thermoplastischen Kunststoffschmelze gefüllt wird und daß dann in die Kunststoffschmelze bzw. die diese enthaltende Kavität des Formwerkzeuges ein fluidisches Druckmedium, insbesondere Gas eingeleitet wird, und zwar zu dem Zweck, einen Teil der flüssigen Kunststoffschmelze wieder aus der Kavität bzw. dem Formnest herauszudrängen.

Bei einer solchen Herstellung von Kunststoff-Formteilen wird der mit Hilfe des fluidischen Druckmediums wieder aus der Kavität bzw. dem Formnest des Formwerkzeuges verdrängte Anteil des thermoplastischen Kunststoffmaterials entweder in den Schneckenvorraum des Spritzaggregates oder aber in Überlaufkammern neben der Kavität bzw. dem Formnest des Formwerkzeuges verdrängt.

Problematisch ist hierbei jedoch im ersteren Fall, daß die Angußöffnung des Formwerkzeuges zum Spritzaggregat hin geöffnet bleiben muß, bis durch die Einwirkung des fluidischen Druckmediums das überschüssige Kunststoffmaterial wieder aus der Kavität bzw. dem Formnest verdrängt worden ist. Hierdurch wird nämlich die Durchführung jedes einzelnen Spritzvorgangs beeinträchtigt.

Im anderen Falle ist eine Fremdsteuerung der Durchlässe zu den Überlaufkammern unumgänglich, d.h. es ergibt sich eine aufwendige Ausgestaltung und Betriebsweise für das jeweilige Formwerkzeug. Außer der eigentlichen Formteil-Kavität müssen nämlich nach jedem Spritzvorgang auch die dieser benachbarten Überlaufkammern von dem darin befindlichen Überschuß-Kunststoffmaterial befreit werden.

Nachteilig ist bei beiden bekannten Verfahrensarten, daß die aus der Kavität bzw. dem Formnest des Formwerkzeuges entweder den Schneckenvorraum des Spritzaggregates oder aber in die Überlaufkammern des Formwerkzeuges verdrängten Mengen des thermoplastischen Kunststoffmaterials von Schuß zu Schuß variieren können mit der Folge, daß es zu großen Gewichtsschwankungen der fertigen Formteile und daraus resultierenden Qualitätsunterschieden kommt.

Ziel der Erfindung ist es nicht nur, eine Möglichkeit zur gezielten Steuerung der Wanddickenverteilung bzw. Mindestwanddicke am Kunststoff-Formteil zu gewährleisten, sondern zugleich auch sicherzustellen, daß in die Kavität bzw. das Formnest des Formwerkzeuges jeweils nur ein solches Volumen an thermoplastischem Kunststoffmaterial eingespritzt zu werden braucht, wie es für die Herstellung des betreffenden Formteils benötigt wird. Es soll also einer Rückverdrängung von thermoplastischem Kunststoffmaterial aus der Kavität bzw. dem Formnest des Formwerkzeuges in den Schneckenvorraum des Spritzaggregates und/oder in Überlaufkammern des Werkzeuges bei jedem Spritzzyklus vorgebeugt werden.

Erreicht wird das gesteckte Ziel in verfahrenstechnischer Hinsicht dadurch,

- daß die Einspeisung des Druckmediums, insbesondere von Gas, in die Kavität und die Kunststoffschmelze zunächst im wesentlichen nur in Fließrichtung der Kunststoffschmelze sowie mit einer Menge und/oder einem Druck vorgenommen wird, durch welche bzw. welchen eine vom Fließwegende entfernt abschließende Medienblase innerhalb der Kunststoffschmelze entsteht und daß dann mit Zeitverzögerung vom Fließwegende her und im wesentlichen entgegengesetzt zur Fließrichtung der Kunststoffschmelze weiteres Druckmedium mit höherem bzw. erhöhtem Druckniveau in die Kavität und die Kunststoffschmelze eingespeist wird sowie dabei eine zweite Medienblase gebildet und wenigstens annähernd mit der bereits bestehenden Medienblase vereinigt wird.

Durch diese Verfahrensart wird ein Teil der in die Kavität bzw. das Formnest des Formwerkzeuges eingespeisten thermoplastischen Kunststoffschmelze entgegen seiner Fließrichtung vom Fließwegende weg zurückgedrängt, und zwar in der Weise, daß es zu einem Aufreißen der aus thermoplastischem Kunststoffmaterial bestehenden Brücke zwischen den beiden Medienblasen kommt und damit auch am Fließwegende eine optimale Wanddickenverteilung des Kunststoffmaterials stattfindet.

Es hat sich gezeigt, daß die gewünschte Mindestwanddicke für das Formteil auch am Fließwegende für das thermoplastische Kunststoffmaterial auf einfache Weise dadurch bestimmt werden kann, daß erfindungsgemäß die Verzögerungszeit zwischen den beiden Druckmedien-Einspeisungen variiert wird. Auch hat sich ergeben, daß mit aufeinanderfolgenden Spritzgieß-Schüssen gefertigten Formteile eine hohe Gewichtskonstanz aufweisen, weil erfindungsgemäß gezielt nur die für die Bildung des betreffenden Formteils benötigte Kunststoffmenge in die Kavität bzw. das Formnest des Formwerkzeuges eingespritzt wird.

Eine wichtige verfahrenstechnische Weiterbildung ergibt sich erfindungsgemäß auch dadurch, daß mit der Vereinigung der beiden Druckmedienblasen das Nachdruck-Druckniveau bestimmt sowie anschließend aufrechterhalten wird, bis die Entformung des Formteils stattfinden kann. Im einfachsten Falle kann dabei das Nachdruck-Druckniveau dem höheren bzw. erhöhten Druckniveau der zweiten Druckmedien-Einspeisung entsprechen und vom Fließwegende für das thermoplastische Kunststoffmaterial her aufrechterhalten werden. Möglich ist es allerdings auch, das Nachdruck-Druckniveau von der Einspritzseite des Kunststoffmaterials her aufzubringen, indem nach Beendigung der zweiten Einspeisung vom Druckmedium dessen - höheres - Druckniveau auf die Einspritzseite für die thermoplastische Kunststoffschmelze umgeschaltet wird.

Als wichtig kann es sich aber in jedem Falle erweisen, wenn das Nachdruck-Druckniveau sich nach der Vereinigung der beiden Medienblasen variieren läßt.

Verfahrenstechnisch kann das mit Fließrichtung der Kunststoffschmelze wirkende Druckmedium - durch die Düse bzw. den Anguß - eingespeist werden, und zwar entweder zeitüberlappt mit der Kunststoffschmelze oder aber im unmittelbaren Anschluß an deren Einspritzung. Ebenso kann es sich als vorteilhaft erweisen, wenn Kunststoffschmelze und in deren Fließrichtung wirkendes Druckmedium gleichzeitig an mehreren Stellen eingespeist werden.

Vielfach kann es aber auch vorteilhaft sein, wenn das mit Fließrichtung der Kunststoffschmelze wirkende Druckmedium getrennt von der Kunststoffschmelze, aber angußnah in diese eingespeist wird, wobei auch in diesem Falle die Möglichkeit besteht, Kunststoffschmelze und in deren Fließrichtung wirkendes Druckmedium gleichzeitig an mehreren Stellen einzuspeisen.

Ein erfindungsgemäß zweck Durchführung des Verfahrens zum Einsatz gelangendes Formwerkzeug, bei dem fluidisches Druckmedium durch die an die Angußöffnung angelegte Spritzdüse des Spritzaggregates oder durch eine der Angußöffnung benachbarte Druckmedien-Einspritzeinheit in die Kavität einführbar ist, zeichnet sich erfindungsgemäß dadurch aus, daß mindesten eine Einspritzeinheit für Druckmedium auch an das oder die von der Angußöffnung entfernte(n) Ende(n) jeder Kavität bzw. jedes Formnestes angeschlossen ist. Selbstverständlich ist es dabei möglich, Formwerkzeuge in Benutzung zu nehmen, bei denen ein und dieselbe Kavität mit mehreren Einspritzstellen für thermoplastisches Kunststoffmaterial und auch mit mehreren Einspritzeinheiten für Druckmedium ausgestattet ist, und zwar dergestalt, daß für das in Fließrichtung der Kunststoffschmelze wirkende Druckmedium jeweils angußnahe Einspritzeinheiten und für das der Fließrichtung der Kunststoffschmelze entgegenwirkende Druckmedium jeweils angußferne Einspritzeinheiten vorhanden sind. Die gleichzeitige Versorgung mehrerer Angußstellen mit thermoplastischem Kunststoffmaterial kann sowohl über eine entsprechende Anzahl von Düsen als auch von nur einer Düse aus über Verteilerkanäle erfolgen, die dann entweder als Heißkanäle oder aber als Kaltkanäle ausgeführt werden.

Nach der Erfindung lassen sich Kunststoff-Spritzguß-Formteile mit Hilfe einfach aufgebauter Formwerkzeuge herstellen, die auch bei einer komplizierten Raumform eine optimale Wanddikkenverteilung bzw. Mindestwanddicke über ihre gesamte Ausdehnung hinweg erhalten und daher in optimaler Weise ihrem jeweiligen Gebrauchszweck dienlich sind.

Es ist selbstverständlich, daß die erfindungsgemäße Verfahrensart nicht nur mit Formwerkzeugen ausgeübt werden kann, die nur eine Kavität bzw. ein Formnest aufweisen. Vielmehr läßt sie sich ohne weiteres auch mit Formwerkzeugen durchführen, in denen mehrere Kavitäten bzw. Formnester vorhanden sind.

Schließlich sind auch Einsatzfälle der erfindungsgemäßen Verfahrensart denkbar, bei denen es aus rein technischen Gründen nicht ohne weiteres möglich ist, die der Fließrichtung der Kunststoffschmelze entgegengerichtete Einspeisung des weiteren Druckmediums unmittelbar am Fließwegende in die der exakten Gestalt der Formteiles entsprechende Kavität bzw. das Formnest des Formwerkzeuges vorzunehmen.

Für solche Einsatzfälle ist aber die Möglichkeit gegeben, am bzw. nahe dem Fließwegende der die eigentliche Formteilegestalt bestimmende Kavität bzw. des Formnestes im Formwerkzeug ein mimimales Zusatzvolumen vorzusehen, innerhalb dem sich am Formteil ein sog. "verlorener Zapfen" ausbilden kann. Im Bereich dieses geringfügigen Kavitäts- bzw. Formnest-Zusatzvolumens kann dabei bei jedem Spritzvorgang in vorteilhafter Weise die Einspeisung des der Fließrichtung der Kunststoffschmelze entgegengerichteten weiteren Druckmediums vorgenommen werden. Der "verlorene Zapfen" läßt sich vom fertigen Formteil nach dessen Entformung leicht und problemlos abtrennen.

Anhand der Zeichnung werden Ausführungsbeispiele des Gegenstandes der Erfindung nachfolgend ausführlich beschrieben. Es zeigen

Figur 1 in rahmenartiges Spritzgießformteil mit einem gleichmäßig in sämtlichen Rahmenschenkel ausgebildeten, rundum von Wandungen umschlossenen Hohlraum,

Figur 2 in schematisch vereinfachter Darstellung den ersten zur Herstellung des Formteils nach Figur 1 dienlichen Verfahrensschritt,

Figur 3 den Beginn deszur Herstellung des Formteils nach Figur 1 dienenden, zweiten Verfahrensschrittes,

Figur 4 die Beendigung des zur Herstellung des Formteils nach Figur 1 dienlichen, zweiten Verfahrensschrittes und den gleichzeitigen Beginn des dritten Herstellungs-Verfahrensschrittes,

Figur 5 ein bügelartig gestaltetes Kunststoff-Spritzgieß-Formteil, das nach der erfindungsgemäßen Verfahrensart hergestellt ist,

Figur 6 schematisch vereinfacht den ersten Herstellungs-Verfahrensschritt für das Formteil nach Figur 4,

Figur 7 den Beginn des zweiten Verfahrensschrittes zur Herstellung des Formteils nach Figur 4,

Figur 8 das Ende des zweiten Verfahrensschrittes und den Beginn des dritten Verfahrensschrittes zur Herstellung des bügelartigen Formteils nach Figur 4,

Figur 9 ein Formwerkzeug, in dem ein etwa U-förmiges Spritzgießformteil mit einem gleichmäßig in sämtlichen Schenkeln ausgebildeten, rundum von Wandungen umschlossenen Hohlraum hergestellt ist,

Figur 10 in schematisch vereinfachter Darstellung den ersten zur Herstellung des Formteils nach Fig. 9 dienlichen Verfahrensschritt,

Figur 11 den Beginn des zur Herstellung des Formteils nach Fig. 9 dienenden, zweiten Verfahrensschrittes,

Figur 12 die Beendigung des zur Herstellung des Formteils nach Fig. 9 dienlichen, zweiten Verfahrensschrittes und den gleichzeitigen Beginn des dritten Herstellungs-Verfahrensschrittes,

Figur 13 im Schnitt ein etwa gabelförmiges Spritzgießformteil mit einem gleichmäßig in sämtlichen Gabelschenkeln ausgebildeten, rundum von Wandungen umschlossenen Hohlraum,

Figur 14 in schematisch vereinfachter Darstellung den in einem Formwerkzeug stattfindenden, ersten zur Herstellung des Formteils nach Fig. 13 dienlichen Verfahrensschrittes,

Figur 15 den Beginn des zur Herstellung des Formteils nach Fig. 13 dienlichen, zweiten Verfahrensschrittes,

Figur 16 in ausführlicher Schnittdarstellung einen erfindungswesentlichen Teilbereich aus einem Spritzgießwerkzeug zur Herstellung eines Handgriffs,

Figur 17 eine Ansicht in Pfeilrichtung XVII-XVII auf die Formtrennebene des Spritzwerkzeugs nach Fig. 16, die

Fig. 18 und 19 zwei Diagramme, welche Druckverhältnisse und Druckverlauf bei der Einspeisung der beiden fluidischen Druckmedien in die thermoplastische Kunststoffschmelze bzw. das Formwerkzeug aufzeigen, die

Fig. 20 bis 22   beispielhaft eine abgewandelte Verfahrenstechnik zur Herstellung eines einen Hohlraum umschließenden-Kunststoff-Spritzgieß-Formteils, während den

Fig. 23 bis 25   wiederum Diagramme entnommen werden können, welche die Druckverhältnisse und den Druckverlauf bei der Einspeisung von Druckmedien für weitere Arbeitsweisen zur Herstellung von Kunststoff-Spritzgieß-Formteilen erkennbar machen.

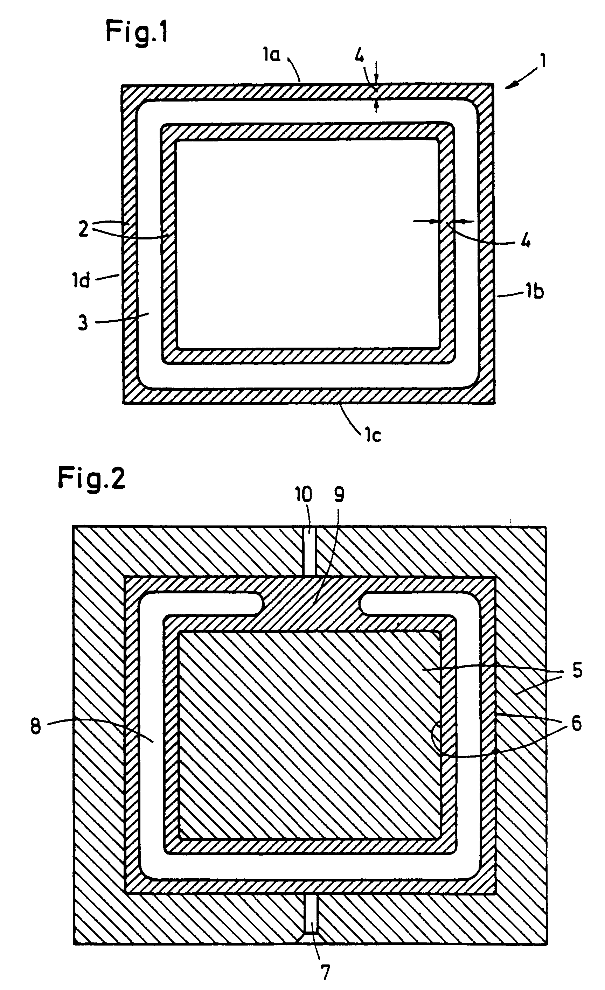

Aus Fig. 1 ist ein bspw. rahmenartig gestaltetes Kunststoff-Spritzgieß-Formteil 1 ersichtlich, das mit Wandungen 2 jedes Schenkels 1a, 1b, 1c, 1d einen ebenfalls rahmenartigen Hohlraum 3 umschließt, und zwar derart, daß sämtliche Wandungen 2 eine möglichst gleichmäßig verteilte Dicke, nämlich die Mindestwanddicke 4, aufweisen.

Zur Herstellung des rahmenartigen Kunststoff-Spritzgieß-Formteils 1 nach Fig. 1 wird das aus den Fig. 2 bis 4 ersichtliche Formwerkzeug 5 eingesetzt, welches in üblicher Weise aufgebaut ist, also in seinem Inneren das Formnest bzw. die Kavität 6 enthält, welches bzw. welche der äußeren Kontur des Kunststoff-Spritzgieß-Formteils 1 entspricht.

Es ist natürlich ohne weiteres auch möglich, Formwerkzeuge 5 zu benutzen, die in ihrem Inneren eine Mehrzahl von Formnestern bzw. Kavitäten 6 aufweisen und daher die gleichzeitige Herstellung mehrerer Kunststoff-Spritzgieß-Formteile 1 ermöglichen.

Das Formwerkzeug 5 ist mit einer in das Formnest bzw. die Kavität 6 mündenden Angußöffnung ausgestattet, an welcher die Spritzdüse des (nicht gezeigten) Spritzgießaggregates einer Kunststoff-Spritzgießmaschine angesetzt werden kann.

Durch die Angußöffnung 7 wird in das Formnest bzw. die Kavität 6 des Formwerkzeuges 5 zunächst schmelzflüssiges thermoplastisches Kunststoffmaterial in einer Menge eingebracht, wie sie für die Herstellung eines Kunststoff-Spritzgieß-Formteils 1 unbedingt nötig ist. Darüber hinaus wird zeitüberlappt mit dem Einspritzen des thermoplastischen Kunststoffmaterials und/oder anschließend hieran ein fluidisches Druckmedium, insbesondere Gas, bspw. ebenfalls durch die Angußöffnung 7 unter Druck in das Formnest bzw. die Kavität 6 des Formwerkzeuges 5 und folglich auch in die thermoplastische Kunststoffschmelze eingespeist.

Diese bspw. durch die Angußöffnung 7 stattfindende Einspeisung von Druckmedium erfolgt dabei in einer Menge und mit einem Druck, welche bzw. welcher ausreicht, um die Verteilung des schmelzflüssigen Kunststoffmaterials längs aller Begrenzungswandungen des Formnestes bzw. der Kavität 6 zu bewerkstelligen, wie das in Fig. 2 der Zeichnung angedeutet ist. Innerhalb des schmelzflüssigen thermoplastischen Kunststoffmaterials entsteht dabei eine Blase 8 aus Druckmedium, welche das Entstehen des Hohlraumes 3 innerhalb des Kunststoff-Spritzgieß-Formteils 1 bewirkt.

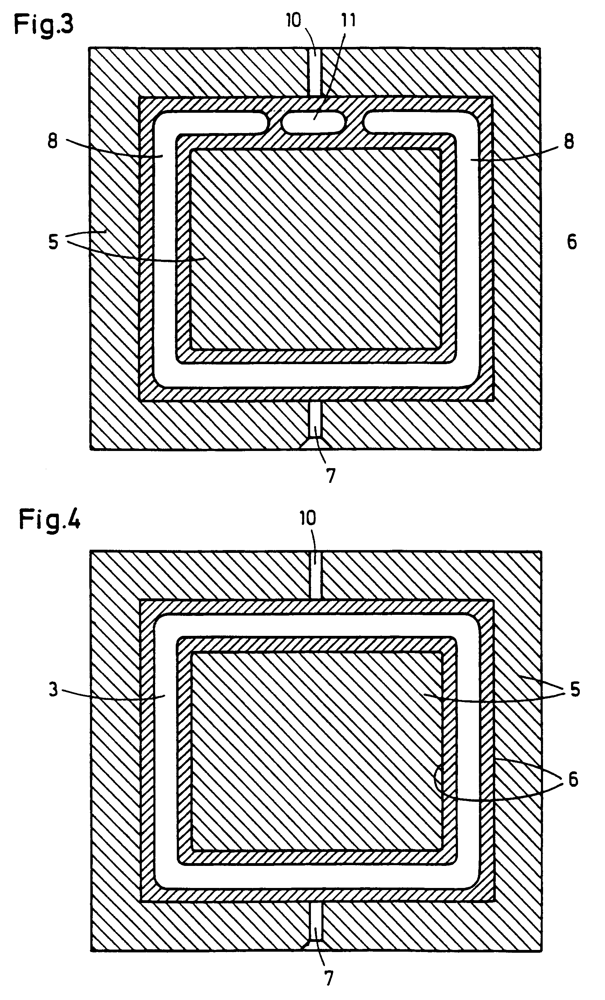

Das Druckmedium wird dabei, bspw. durch die Angußöffnung 7, zunächst nur in einer Menge und mit einem Druck zugeführt, welche bzw. welcher die Bildung einer Blase 8 im thermoplastischen Kunststoffmaterial zuläßt, die nicht das hintere Ende des Fließweges der thermoplastischen Kunststoffschmelze erreichen kann. Am hinteren Ende des Fließweges bleibt daher in der thermoplastischen Kunststoffschmelze ein massiver Abschnitt 9 bestehen, wie das in Fig. 2 der Zeichnung erkennbar ist. Die Länge der Blase 8 wird dabei vor allem durch die bei jedem Spritzgießvorgang (Schuß) eingespritzte Menge des thermoplastischen Kunststoffmaterials beeinflußt. Wenn also ein hoher Prozentsatz an Kunststoffmaterial vorgelegt wird, verbleibt nur noch eine entsprechend geringe Möglichkeit für die Ausbildung der Blase 8, wie auch umgekehrt. Damit aber der massive Abschnitt 9 thermoplastischer Kunststoffschmelze am hinteren Ende des Fließweges eliminiert wird, sich also auch dort innerhalb des Kunststoff-Spritzgieß-Formteils 1 der Hohlraum 3 ordnungsgemäß ausbildet, wird an einer von der Angußöffnung 7 entfernten Stelle, nämlich durch einen den massiven Abschnitt 9 thermoplastischer Kunststoffschmelze benachbarten Kanal 10 des Formwerkzeuges 5 in dessen Formnest bzw. Kavität 6 nach einer gewissen Zeitverzögerung, die sich vorzugsweise variieren läßt, weiteres Druckmedium, bspw. ein Gas oder Luft, eingespeist. Hierdurch bildet sich dann auch im Abschnitt 9 der thermoplastischen Kunststoffschmelze eine Blase 11 aus, wie das die Fig. 3 erkennen läßt. Das Druckmedium der Blase 11 hat dabei ein Druckniveau, welches den Druck des Druckmediums in der Blase 8 zumindest geringfügig übersteigt. Es wird dadurch bewirkt, daß sich unter Verdrängung thermoplastischer Kunststoffschmelze entgegengesetzt zu ihrer ursprünglichen Fließrichtung die Blase 11 vergrößert, bis sie vorzugsweise zur Blase 8 hindurchbricht und sich damit die Druckmedien beider Blasen 8 und 11 vereinigen, wie das aus Fig. 4 erkennbar ist. Damit entsteht dann auch in dem zuvor massiven Abschnitt 9 der Kunststoffschmelze der Hohlraum 3, wobei das höhere Druckniveau des über die Blase 11 eingespeisten Druckmediums benutzt werden kann, um innerhalb des insgesamt entstandenen Hohlraums 3 die Nachdruck-Wirkung auf das Kunststoffmaterial auszuüben, bis dieses zu den Wandungen 2 des Kunststoff-Spritzgieß-Formteils 1 erstarrt ist. Der Nachdruck-Druck kann dabei noch innerhalb gewisser Grenzen variiert werden, um optimale Spritzergebnisse zu erzielen.

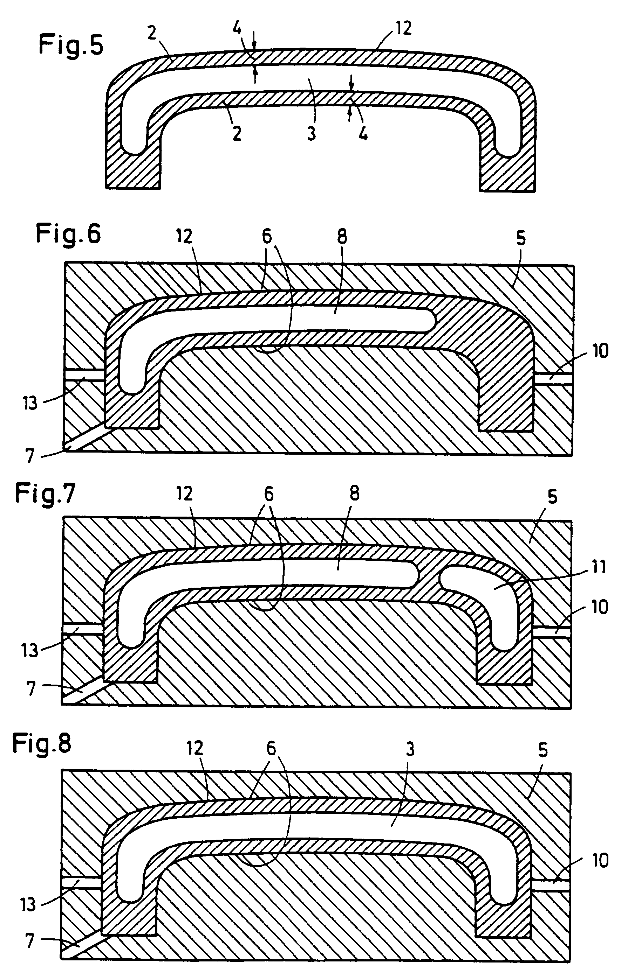

In den Fig. 5 bis 8 der Zeichnung ist gezeigt, daß auch ein bügelartig gestaltetes Kunststoff-Spritzgieß-Formteil 12 mit gleichmäßiger Wanddickenverteilung und bestimmter Mindestwanddicke 4 auf die gleiche Art und Weise hergestellt werden kann, wie dies vorstehend anhand der Fig. 1 bis 4 für ein rahmenartiges Kunststoff-Spritzgieß-Formteil 1 erläutert worden ist. Das in diesem Falle zum Einsatz gelangende Formwerkzeug 5 mit dem Formnest bzw. der Kavität 6 ist jedoch insofern gegenüber dem Formwerkzeug 5 nach den Fig. 2 bis 4 unterschiedlich gestaltet, als die Zuführung des fluidischen Druckmediums zur Bildung der Blase 8 nicht durch die Angußöffnung 7 stattfindet, welche dem Einspritzen der thermoplastischen Kunststoffschmelze dient. Vielmehr wird das zum Aufbau der Blase 8 notwendige Druckmedium durch einen zusätzlichen Kanal 13 eingespeist, welcher zwar in der Nähe der Angußöffnung 7 liegt, jedoch unabhängig von diesem in das Formnest bzw. die Kavität 6 des Formwerkzeuges 5 hineingerichtet ist.

Nach den Fig. 6 bis 8 der Zeichnung ist das Formwerkzeug 5 mit nur einem Angußkanal 7 zum Einführen thermoplastischer Kunststoffschmelze in das Formnest bzw. die Kavität 6 ausgestattet. Auch sind jeweils nur ein Kanal 13 für das Einspeisen von der Bildung einer Blase 8 dienendem Druckmedium und ein Kanal 10 zur Einspeisung von der Bildung der Blase 11 dienendem Druckmedium vorhanden, und zwar in der Weise, daß der Kanal 13 der Angußöffnung 7 im Formnest bzw. in der Kavität 6 naheliegt, während der Kanal 10 sich am anderen Ende des Formnestes bzw. der Kavität befindet.

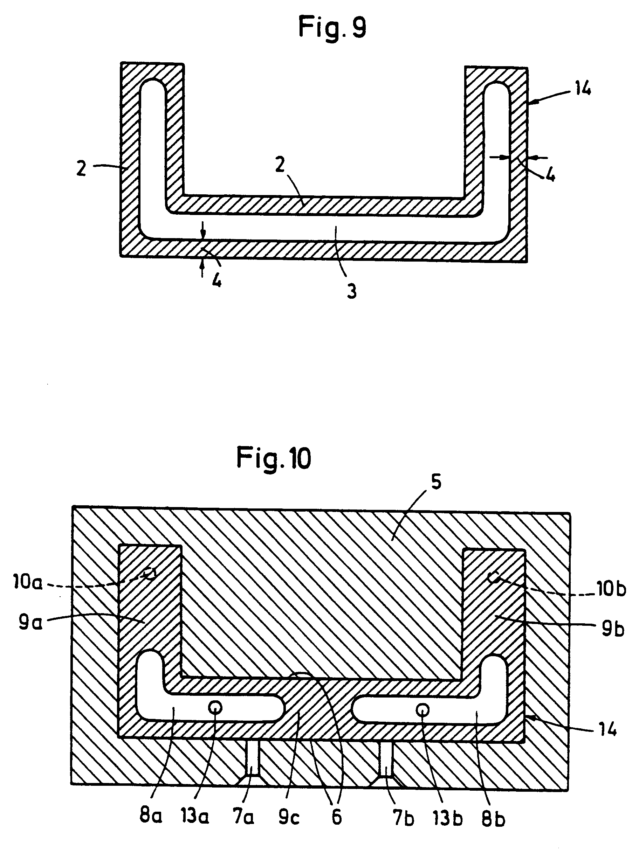

Mit den Fig. 9 bis 12 der Zeichnung wird die Herstellung eines Kunststoff-Spritzgieß-Formteil 14 wiedergegeben, das bspw. eine im wesentlichen U-förmige Grundgestalt hat. Erkennbar ist dabei aus der Zeichnung, daß das Formnest bzw. die Kavität 6 des Formwerkzeuges 5 nicht nur durch zwei verschiedene Angußöffnungen 7a und 7b mit thermoplastischer Kunststoffschmelze versorgt wird. Vielmehr sind dort auch zwei Kanäle 13a und 13b zur Einspeisung des ersten Druckmediums sowie zwei Kanäle 10a und 10b zur Einspeisung des zweiten Druckmediums vorhanden.

Mit dem Einspeisen des ersten Druckmediums durch die Kanäle 13a und 13b in das Formnest bzw. die Kavität 6 entstehen in der drin befindlichen thermoplastischen Kunststoffschmelze zunächst nebeneinander zwei Medienblasen 8a und 8b, die sich nicht nur in Richtung aufeinander zu, sondern auch in Richtung zu den beiden Fließwegenden des Formnestes bzw. der Kavität 6 hin in gewissem Umfang ausdehnen, wie sich das der Fig. 10 entnehmen läßt. Zu den Fließwegenden hin bleiben jedoch jeweils massive Abschnitte 9a und 9b thermoplastischer Kunststoffschmelze erhalten und ein ähnlicher massiver Abschnitt 9c thermoplastischer Kunststoffschmelze ist auch zwischen den beiden Blasen 8a und 8b aufgebaut, wie das Fig. 10 erkennen läßt. Wird nunmehr unter erhöhtem Druck weiteres Druckmedium durch die Kanäle 10a und 10b nahe den Fließwegenden eingespeist, dann bilden sich auch dort weitere Druckmedien-Blasen 11a und 11b aus, wobei sich jede derselben unter Verdrängung thermoplastischer Kunststoffschmelze in Richtung zur benachbarten Blase 8a bzw. 8b hin ausdehnt. Bedingung für die Vereinigung der Druckmedienblasen ist, daß zwischen diesen jeweils ein genügend großer Druckunterschied herrscht.

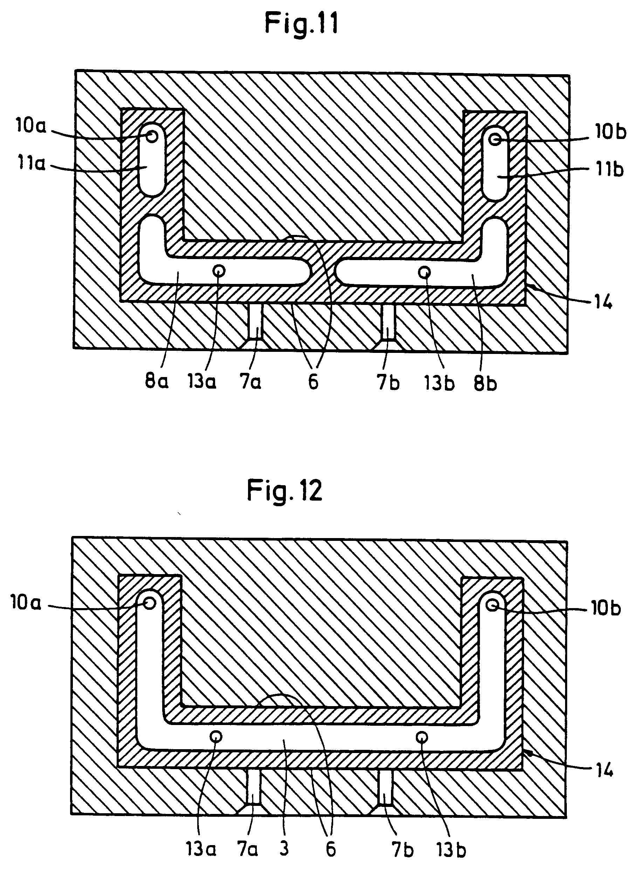

Mit der Ausdehnung der beiden Druckmedienblasen 11a und 11b geht dabei auch noch eine Gegeneinanderverlagerung der beiden Druckmedienblasen 8a und 8b einher, und zwar in der Weise, daß sich nicht nur die Druckmedienblasen 11a und 8a sowie 11b und 8b vereinigen, sondern darüber hinaus auch noch eine Vereinigung der Druckmedienblasen 8a und 8b eintritt, womit dann der Hohlraum 3 entsteht, wie das in Fig. 12 zu sehen ist.

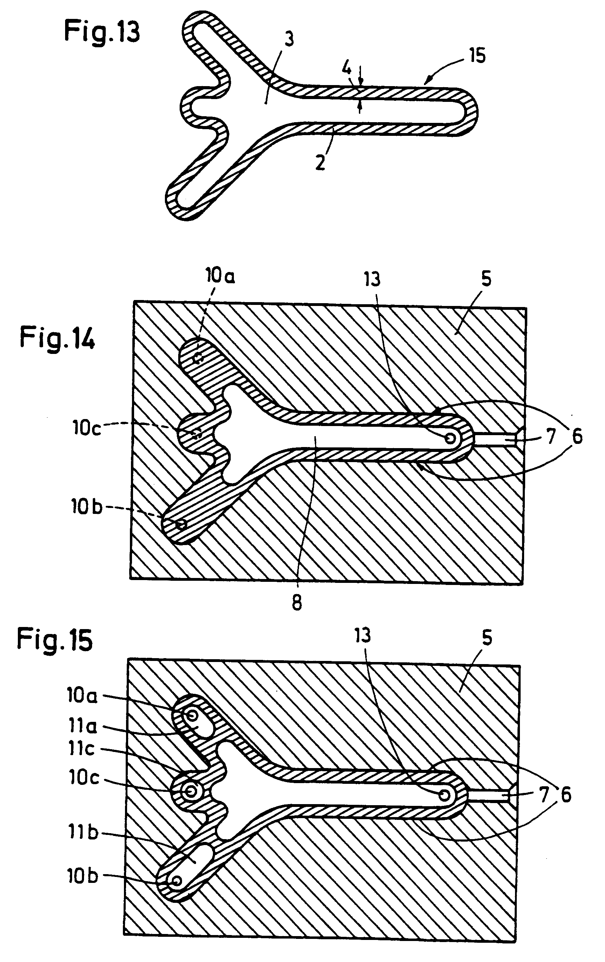

In Fig. 13 ist ein Kunststoff-Spritzgieß-Formteil 15 gezeigt, das eine im wesentlichen gabelartige Grundform hat und dessen Wandungen 2 einen in sämtliche (vier) Gabelschenkel hineingehenden Hohlraum 3 umschließen, wobei die Wandungen 2 überall eine bestimmte Mindestwanddicke 4 aufweisen.

Zur Herstellung des Kunststoff-Spritzgieß-Formteils 15 wird zunächst in das Formnest bzw. die Kavität 6 des Formwerkzeuges 5 durch den Angußkanal 7 eine ausreichende Menge thermoplastischer Kunststoff-schmelze eingespritzt. Sodann wird nahe dem Angußkanal 7 in das Formnest bzw. die Kavität 6 des Formwerkzeuges 5 und folglich auch in die thermoplastische Kunststoffschmelze durch einen Kanal 13 fluidisches Druckmedium eingespeist, und zwar im wesentlichen in Fließrichtung der thermoplastischen Kunststoffschmelze. Hierdurch entsteht dann in einem Gabelschenkel des Kunststoff-Spritzgieß-Formteils 15 eine Druckmedienblase 8, die sich allmählich in Richtung zu den weiteren Gabelschenkeln hin vergrößern, wie das die Fig. 14 der Zeichnung erkennbar macht. Die Druckmedienblase 8 kann dabei aber nicht oder nur unwesentlich in die weiteren Gabelschenkel des Kunststoff-Spritzgieß-Formteils 15 eindringen.

In jeden weiteren, sich zum Fließwegende des Formnestes bzw. der Kavität 6 hin erstreckenden Gabelschenkel mündet ein Kanal 10a, 10b und 10c ein, der mit weiterem Druckmedium versorgt werden kann. Durch das weitere Druckmedium wird daher eine eigene Druckmedienblase 11a, 11b, 11c aufgebaut, die sich unter den herrschenden Druckverhältnissen in Richtung auf die Druckmedienblase 8 hin vergrößert und letztlich in diese hinein durchbricht. Dadurch entsteht dann das fertige Kunststoff-Spritzgieß-Formteil 15 nach Fig. 13, das einen relativ großen Hohlraum 3 hat, der überall mit einer Mindestwanddicke 4 der Wandungen 2 eingeschlossen ist.

Die Figuren 1 bis 15 der Zeichnung machen anhand rein schematischer Darstellungen deutlich, daß die zeitversetzte und im wesentlichen in zueinander entgegengesetzten Richtungen stattfindende Einspeisung zweier Druckmedien in die mit thermoplastischer Kunststoffschmelze beschickte Kavität eines Formwerkzeugs in Abhängigkeit von der Formgestalt des jeweiligen Formteils an den verschiedensten Stellen vorgenommen werden kann. Anzahl und Anordnung der Einspeisungsstellen für die Druckmedien können dabei bedarfsabhängig variiert werden, insbesondere in Abstimmung auf die Kompliziertheit des Formteils und auf die Fließeigenschaften des zu deren Herstellung verwendeten Kunststoffmaterials unterschiedlich ausgewählt werden.

Die in den bisher erläuterten Zeichnungsfiguren dargestellten Formwerkzeuge 5 sind so aufgebaut, daß an ihre Angußkanäle 7 bzw. 7a, 7b jeweils die Spritzdüsen von Spritzgießaggregaten unmittelbar zur Anlage gebracht werden.

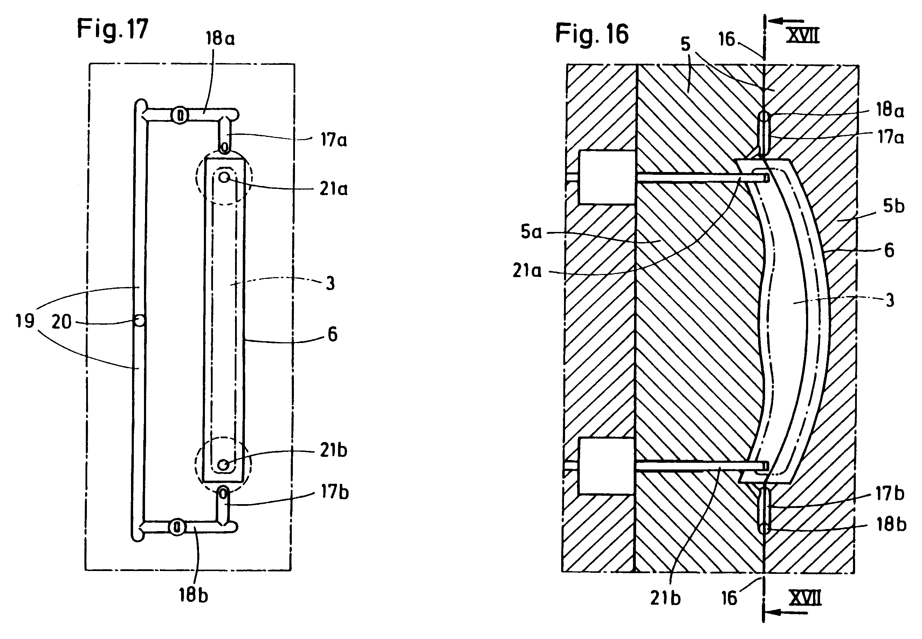

In den Fig. 16 und 17 ist in ausführlicher Darstellung ein Spritzgießwerkzeug 5 zu sehen, dessen Formnest bzw. Kavität 6 zwischen zwei Formhälften 5a und 5b eingeschlossen ist, welche an der Trennebene 16-16 aneinanderliegen. Das Formnest bzw. die Kavität 6 begrenzt dabei eine schmale, lange und bogenförmig gekrümmte Hohlform, in die an voneinander abgewendeten Enden je ein Angußkanal 17a bzw. 17b einmündet. Jeder Angußkanal 17a und 17b steht dabei mit einem Kanalzweig 18a bzw. 18b eines Verteilkanals 19 in Verbindung, der wiederum von einem Anschlußkanal 20 gespeist wird, an den die Düse des Spritzgießaggregates angelegt ist. Während die thermoplastische Kunststoffschmelze in das Formnest bzw. die Kavität 6 des Formwerkzeuges 5 durch die Angußkanäle 17a und 17b eingespritzt wird, sind zur Einspeisung der Druckmedien in das Formnest bzw. die Kavität 6 und in die darin befindliche Kunststoffschmelze an verschiedenen Stellen Hohlnadeln 21a und 21b in das Formwerkzeug 5, bspw. die Formhälfte 5a, eingesetzt. Diese Hohlnadeln 21a und 21b zur Einspeisung der Druckmedien wird dabei entweder stationär eingebaut, d.h., sie ragen mit ihren freien Enden ständig in das Formnest bzw. die Kavität 6 hinein (Fig. 16), oder aber sie sind axial verschiebbar vorgesehen und lassen sich dadurch zeitweilig mit ihren freien Enden bis in das Formnest bzw. die Kavität 6 vorschieben.

Wenn in der vorangehenden Beschreibung im Zusammenhang mit der Einspeisung der fluidischen Druckmedien von Kanälen 10, 10a, 10b, 10c und 13, 13a, 13b gesprochen wird, dann ist es selbstverständlich, daß zur Bildung bzw. anstelle dieser Druckmedien-Einspeisungskanäle auch Hohlnadeln sogenannter Einspritzbausteine in Benutzung genommen werden können, wie sie zuletzt beschrieben worden sind.

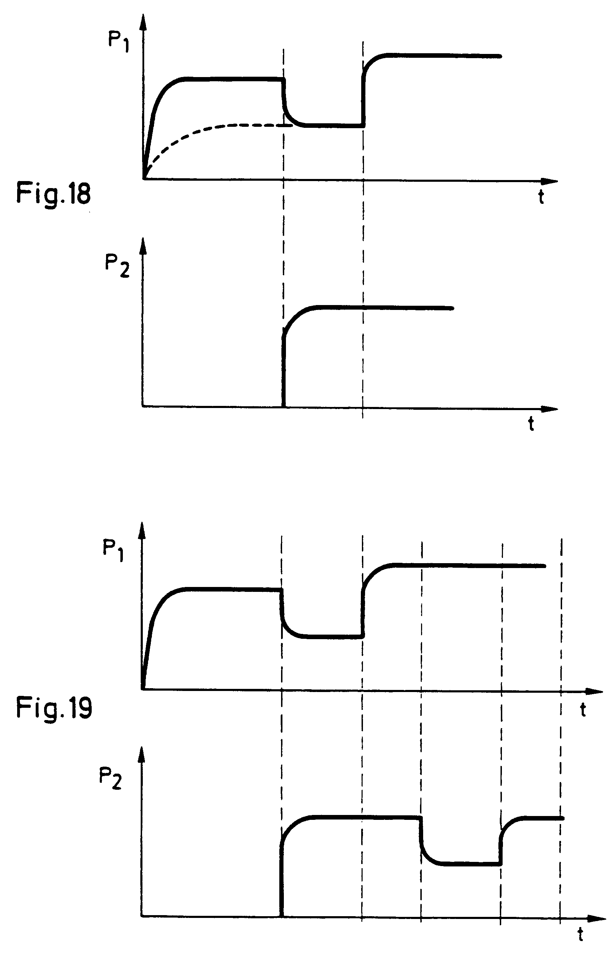

Das Diagramm der Fig. 18 läßt in einer Darstellung "Druck über Zeit" erkennen, wie die beiden Druckmedien auf die im Formnest bzw. in der Kavität 6 des Formwerkzeuges 5 befindliche thermoplastische Kunststoffschmelze einwirken, um in dem daraus gebildeten Kunststoff-Spritzgieß-Formteil die ordnungsgemäße Bildung des Hohlraums 3 bei überall gleichmäßiger Mindestwandstärke 4 herbeizuführen. Die obere Druckkurve in Fig. 18 kennzeichnet dabei den Druckverlauf, wie er dem Druckmedium eigentümlich ist, das über die Medienblase 8 eingespeist wird, während die untere Druckkurve von Fig. 18 dem Druckverlauf entspricht, welcher über die Medienblase 11 zur Wirkung kommt. Erkennbar ist hier auch, daß nach Vereinigung der beiden Medienblasen 8 und 11, also nach der fertigen Ausbildung des Hohlraums 3, im jeweiligen Kunststoff-Spritzgieß-Formteil ein Nachdruck-Druck aufrechterhalten bleibt, welcher zumindest aus beiden Teildrücken P1 und P2 resultiert, der vorzugsweise jedoch auf dem höheren Niveau des zweiten Teildruckes P2 gehalten wird.

Während nach dem Diagramm der Fig. 18 lediglich der Teildruck P1 zeitweilig abgesenkt wird, nämlich dann, wenn der Aufbau des Druckes P2 über die Medienblase 11 stattfindet, ist nach dem Diagramm der Fig. 19 auch eine Absenkung des Druckes P2 vorgesehen, d.h. nach einer relativ kurzen durch beide Teildrücke P1 und P2 bewirkten Nachdruckzeit wird zunächst eine Absenkung und dann eine Wiederanhebung des Druckes P2 für das zweite Druckmedium bewirkt.

Abweichend vom Diagramm der Fig. 18 ist es auch möglich, die beiden Druckkurven mit einem Zeitversatz zu fahren. So ist es bspw. denkbar, daß zunächst der Druck der ersten (oberen) Druckkurve abgesenkt und mit einer Zeitverzögerung der Druck der zweiten (unteren) Kurve aufgebaut wird.

Bei allen vorstehend erläuterten Ausführungsbeispielen liegt die einzige Bedingung, welche für die Herstellung von Kunststoff-Spritzgieß-Formteilen mit von Wandungen 2 eingeschlossenem Hohlraum 3 an das Formwerkzeug 5 gestellt wird, darin, daß mindestens eine zusätzliche Einspritzeinheit für Druckmedium über einen Kanal an von der Angußöffnung 7 entfernte Enden des Formnestes bzw. der Kavität 6 angeschlossen wird.

Nachdem der bereits weiter vorne erwähnte Nachdruck-Druck aufgebaut und das Kunststoff-Spritzgieß-Formteil 1 erstarrt ist, kann die Druckentlastung des in diesem gebildeten Hohlraums 3 gezielt, bspw. über die in diesen hineinragenden Hohlnadeln 21a und 21b der Einspritzeinheiten bewirkt werden. Bedarfsweise läßt sich dabei diese Druckentlastung an einer oder mehreren Stellen gleichzeitig bewirken.

Formwerkzeuge 5, die mit gegen den Schneckenvorraum des Spritzaggregates hin wirkenden Absperrvorrichtungen und/oder mit dem Formnest bzw. der Kavität 6 benachbarten Überlaufkammern ausgestattet sind, werden jedoch nicht benötigt.

Da die Verzögerungszeit zwischen den Druckmedien-Einspeisungen in das Formnest bzw. die Kavität 6 des Formwerkzeuges 5 variiert werden kann, läßt sich die Dicke, insbesondere die Mindestwanddicke 4 des Kunststoff-Spritzgieß-Formteils 1 bzw. 12 bzw. 14 bzw. 15 auch in demjenigen Bereich bestimmen, welcher in Fließrichtung der Kunststoffschmelze jeweils am hinteren Ende des Fließweges liegt, also von der Angußöffnung 7 des betreffenden Formwerkzeuges 5 weit entfernt ist.

Abschließend sei noch auf folgendes hingewiesen:

Es besteht auch die Möglichkeit, das gegen die Fließrichtung der Kunststoffschmelze wirkende Druckmedium an mehreren verschiedenen Stellen in die Kavität bzw. das Formnest 6 einzuspeisen. Dabei ist es für die Vereinigung der verschiedenen Medienblasen 8 und 11 bzw. 8a, 8b und 11a, 11b, 11c von Bedeutung, daß immer ein Druckgefälle zwischen benachbarten Blasen herrscht, so daß es zu einer Durchwanderung des Druckmediums durch das zwischen benachbarten Blasen vorhandene Kunststoffmaterial 9 kommen muß. Für die Vereinigung von mehr als zwei Gasblasen, wie das in den Fig. 9 bis 15 gezeigt wird, ist natürlich Bedingung, daß zwischen allen Medienblasen ein genügendes Druckgefälle herrscht.

Durch die in Fig. 19 dargestellte Variation der Drücke kann man gezielt einen wechselseitigen Druckunterschied zwischen den ersten Medienblasen 8 bzw. 8a, 8b und den zweiten Medienblasen 11 bzw. 11a, 11b, 11c erzeugen, damit das Durchwandern der Druckmedien durch das Kunststoffmaterial sichergestellt werden kann, also die massiven Abschnitte 9 bzw. 9a, 9b, 9c von thermoplastischem Kunststoffmaterial sicher eliminiert bzw. durchbrochen werden.

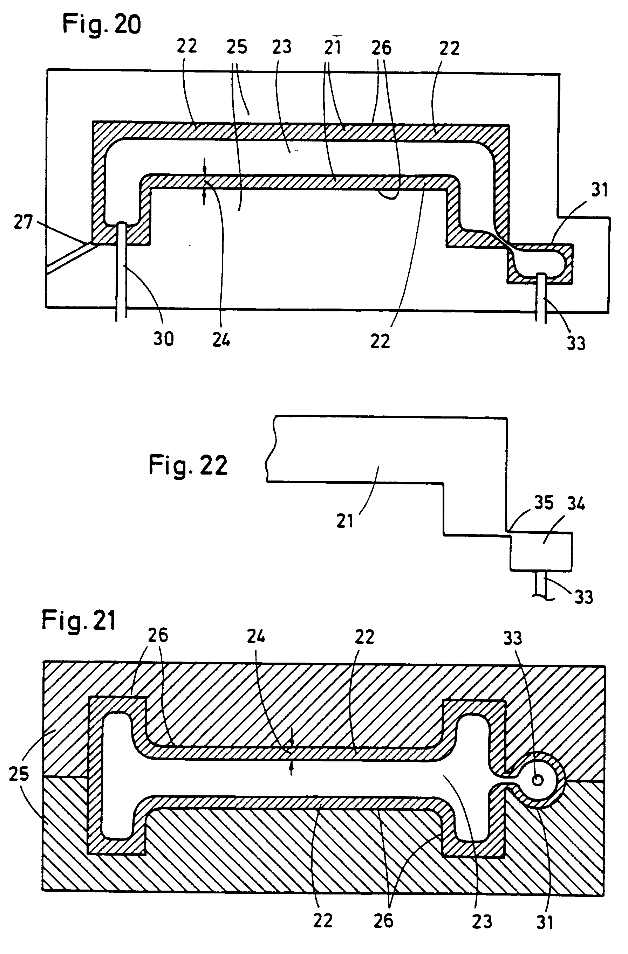

Anhand der Fig. 20 - 22 der Zeichnung wird nunmehr eine noch etwas abgewandelte Herstellungsmöglichkeit für Kunststoff-Spritzgieß-Formteile erläutert. Dabei wird unterstellt, daß es in manchen Fällen aus rein technischen Gründen nicht möglich ist, die der Fließrichtung der Kunststoffschmelze entgegengerichtete Einspeisung des weiteren Druckmediums in die der exakten Gestalt des Kunststoff-Spritzgieß-Formteils 21 entsprechende Kavität bzw. das Formnest 26 des Formwerkzeuges 25 vorzunehmen. Das Kunststoff-Spritzgieß-Formteil 21 hat bspw. eine im wesentlichen U-Gestalt, welche durch das Formnest bzw. die Kavität 26 des Formwerkzeuges 25 bestimmt wird. Dabei wird die thermoplastische Kunststoffschmelze in das Formnest bzw. die Kavität 26 durch die Angußöffnung 27 eingespeist. In der Nähe dieser Angußöffnung 27 wird auch das erste Druckmedium durch einen Kanal 30 in das Formnest bzw. die Kavität 26 des Formwerkzeuges 25 sowie die darin befindliche Kunststoffschmelze eingeführt. Dieses erste Druckmedium entfaltet dabei seine Wirkung in Fließrichtung der Kunststoffschmelze und sorgt damit dafür, daß diese sich unter Bildung der Wandungen 22 mit möglichst gleichmäßig verteilter Dicke, nämlich der Mindestwanddicke 24 an die vorgegebene Kontur des Formnestes bzw. der Kavität 26 anlegt.

In von der Angußöffnung 27 und dem Kanal 30 abgewendete bzw. entfernte Ende des Formnestes bzw. der Kavität 26 des Formwerkzeuges 25 mündet nicht unmittelbar der zusätzliche Kanal 33, durch welches Gas entgegen der Fließrichtung der Kunststoffschmelze wirkende weitere Druckmedium einzuführen ist. Vielmehr schließt sich dort, wie die Fig. 20 und 21 deutlich erkennen lassen, an das der eigentlichen Formteil-Gestalt entsprechende Formnest bzw. an die Kavität 26 ein minimales Zusatzvolumen 31 an, in welches der Kanal 33 zur Zuführung des weiteren Druckmediums einmündet.

Das durch den Kanal 33 eingespeiste weitere Druckmedium tritt in das eigentliche Formnest bzw. die Kavität 26 über und wirkt auf die darin befindliche thermoplastische Kunststoffschmelze entgegengesetzt zu deren Fließrichtung ein. Dadurch legt sich auch im Bereich des Fließwegendes die Kunststoffschmelze unter Hohlraumbildung in ihrem Inneren unter Bildung von Wandungen 22 an die Kontur des Formnestes bzw. der Kavität 26 an. Währenddessen tritt dann auch ein geringfügiger Anteil der Kunststoffschmelze in das Zusatzvolumen 31 außerhalb des Formnestes bzw. der Kavität 26 über, so daß sich hierin am eigentlichen Kunststoff-Spritzgieß-Formteil 21 insoweit ein "verlorener Zapfen" 34 ausbildet (vergl. Fig. 22), wie das Zusatzvolumen 31 nicht als Durchlaß für das weitere Medium zum Formnest bzw. zur Kavität 26 benötigt wird.

Nach dem Entformen des Kunststoff-Spritzgieß-Formteils 21 kann dann der sog. "verlorene Zapfen" 34 im Bereich der Dünnstelle 35 unmittelbar am Kunststoff-Spritzgieß-Formteil 21 abgetrennt werden, wie das Fig. 22 der Zeichnung deutlich macht.

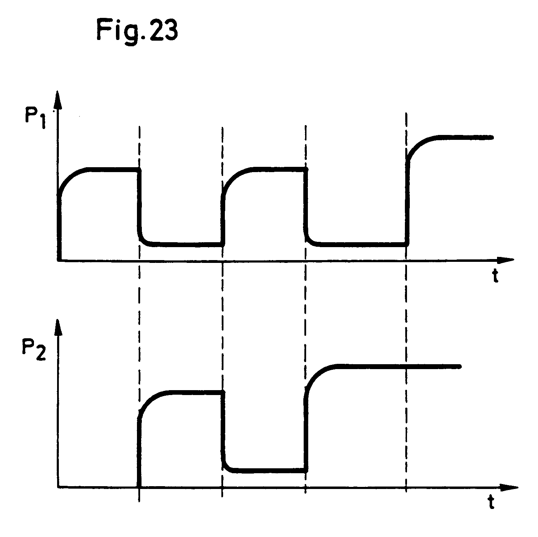

Auch die Diagramme der Fig. 23 bis 25 machen wieder in einer Darstellung "Druck über Zeit" deutlich, wie die Druckmedien in unterschiedlichster Art und Weise auf die im Formnest bzw. in der Kavität 6 des Formwerkzeuges 5 befindliche thermoplastische Kunststoffschmelze zur Einwirkung gebracht werden können, um in den daraus gebildeten Kunststoff-Spritzgieß-Formteilen die ordnungsgemäße Ausgestaltung des Hohlraums 3 bei überall gleichmäßiger Mindestwandstärke 4 herbeizuführen.

Es hat sich herausgestellt, daß es in vielen Fällen von Vorteil sein kann, wenn während des Einbringens und auch nach dem Einbringen der thermoplastischen Kunststoffschmelze in das Formnest bzw. die Kavität 6 des Formwerkzeuges 5 ein mehrmaliger Wechsel zwischen den Drücken $P_1$ und $P_2$ bewirkt wird. Das vollständige Durchdringen der verschiedenen Gasblasen durch die Kunststoffschmelze wird hierdurch nämlich wesentlich verbessert. Eine solche Arbeitsmöglichkeit ist im Diagramm der Fig. 23 dargestellt. Dabei läßt sich erkennen, daß die Drücke bei den einzelnen Arbeitsintervallen nicht gleich groß sein müssen. Es kann auch zweckmäßig sein, mit zunächst ansteigenden oder auch abfallenden Druckintervallen zu fahren, um die Durchdringung der Blasen optimal sicherzustellen.

Auch bei der Benutzung von mehreren Kanälen 10a, 10b, 10c für die Einspeisung von Druckmedien, wie sie z.B. in Fig. 15 zu sehen sind, ist es denkbar, daß die Einspeisung der Druckmedien an den unterschiedlichen Punkten zu unterschiedlichen Zeiten und mit unterschiedlichen Drücken vorgenommen wird, so daß sich ein willkürlich hervorgerufenes Takten der Drücke an den verschiedenen Einspeisungsstellen verwirklichen läßt.

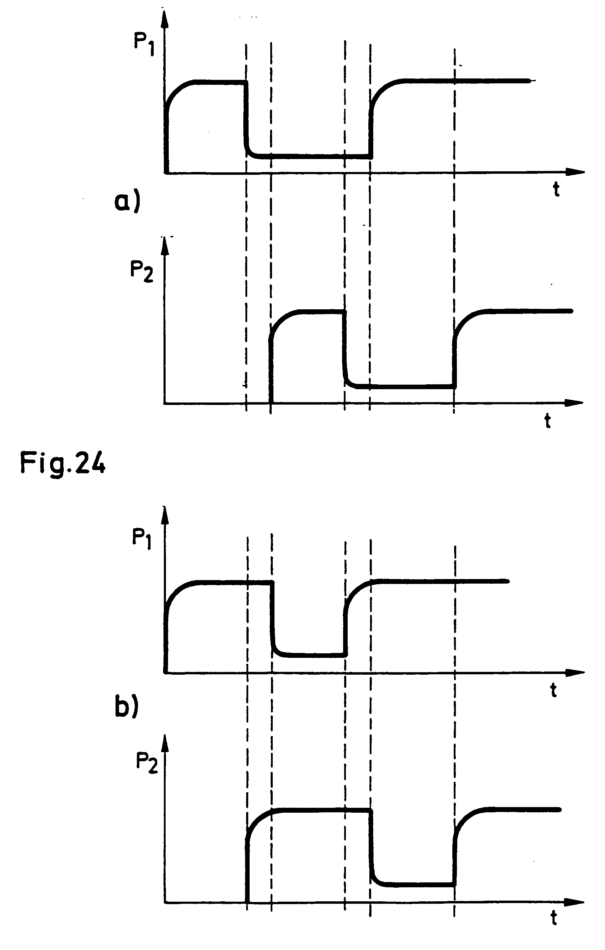

Wie Fig. 24 erkennen läßt, kann es im Interesse der optimalen Durchdringung der Druckmedienblasen auch zweckmäßig sein, den Druck an der einen Einspeisungsstelle schon abfallen zu lassen und erst nach einer Zeitverzögerung den Druck an einer anderen Stelle aufzubringen oder auch umgekehrt, wie das der linken Hälfte a) der Fig. 24 entnehmbar ist.

Die rechte Hälfte b) der Fig. 24 zeigt hingegen auf, daß auch eine Zeitüberschneidung zwischen den einzelnen Drücken $P_1$ und $P_2$ stattfinden kann, wobei sich diese, hauptsächlich in Abhängigkeit vom jeweiligen Formteil, frei wählen läßt.

Auch diese Arbeitsmöglichkeit läßt sich dabei anwenden, wenn mehrere Einspeisungsstellen 10a, 10b und 10c behandelt werden sollen, wie sie in Fig. 15 zu sehen sind.

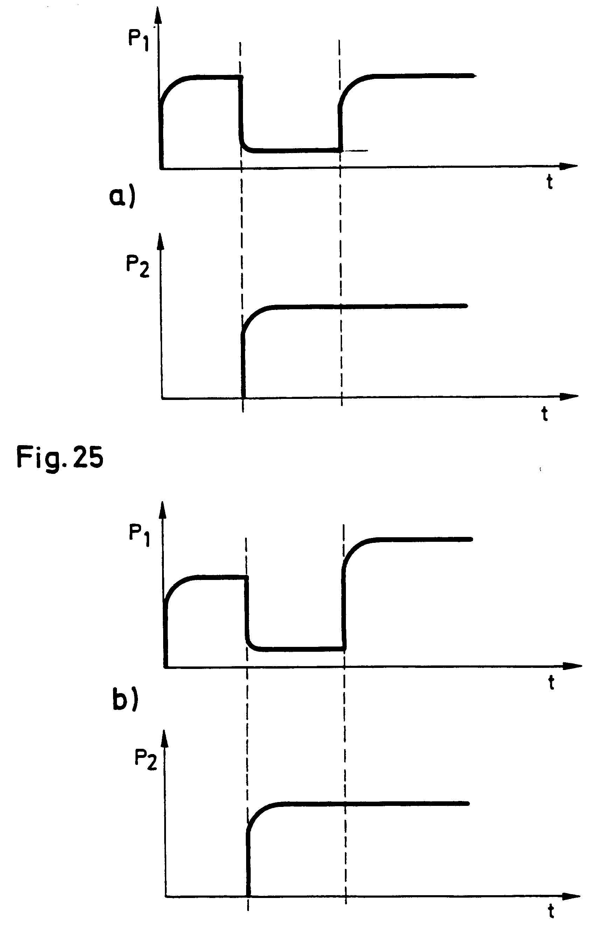

In Fig. 25 ist schließlich noch zu sehen, daß auch Enddrücke $P_1$ und $P_2$, wie sie zur Aufrechterhaltung nach Nachdruckes erzeugt werden, nicht zwangsläufig die gleiche Höhe haben müssen.

Wenn nämlich diese Drücke gleich sind ($P_1 = P_2$ bzw. $P_x$) dann wird das Druckmedium aller Einspeisungsstellen quasi eingespannt und es erfolgt kein Medienfluß.

Sind jedoch die Drücke $P_1$, $P_2$ bzw. $P_x$ in ihrer Höhe unterschiedlich, dann stellt sich als Folge des Druckgefälles ein Medienfluß vom jeweils höheren zum jeweils niederen Druck ein und es findet ein Gasaustausch statt.

In der linken Hälfte a der Fig. 25 ist gezeigt, daß der Nachdruck für $P_1$ kleiner ist als der Nachdruck für $P_2$. In diesem Falle wird daher ein Medienfluß von der Einspeisungsstelle $P_2$ zu der Einspeisungsstelle $P_1$ hin erfolgen.

In der rechten Hälfte der Fig. 25 ist der umgekehrte Fall zu sehen. Hier ist der Nachdruck $P_1$ größer als der Nachdruck $P_2$, so daß sich ein Medienfluß von $P_1$ nach $P_2$ einstellt.

Durch die Druckunterschiede zwischen den einzelnen Einspeisungsstellen kann somit ein Medienwechsel stattfinden und folglich eine Verbesserung des Wärmetransportes aus dem Formnest erreicht werden.

Bei mehr als zwei Einspeisungsstellen 10a, 10b, 10c, wie sie in Fig. 15 zu sehen sind, muß lediglich sichergestellt werden, daß ein kontrollierbarer Medienfluß erzeugt wird. Das läßt sich dadurch erreichen, daß bei der jeweiligen Formteilgeometrie durch Anpassung der Drücke an den einzelnen Einspeisungsstellen der Medienfluß von den Einspeisungsstellen 10a, 10b oder 10c zurück zur Einspeisungsstelle 13 bzw. umgekehrt von der Einspeisungsstelle 13 zu den Einspeisungsstellen 10, 10b oder 10c erfolgt. Zur Intensivierung der Kühlung in den einzelnen Bereichen kann es sich gegebenenfalls auch als zweckmäßig erweisen, einen gezielten Medienfluß nur zu der einen oder anderen Medieneinspritzstelle zu erhalten, dann den Mediendruck abzusenken und nachfolgend einen gezielten Medienfluß zu den übrigen Einspeisungsstellen mit dem niedrigeren Druck herbeizuführen.

**Liste der Bezugszeichen**

| | |
|---|---|
| 1 | Kunststoff-Spritzgieß-Formteil |
| 1a, 1b, 1c, 1d | Schenkel |
| 2 | Wandungen |
| 3 | Hohlraum |
| 4 | Dicke/Mindestwanddicke |
| 5 | Formwerkzeug |
| 6 | Kavität bzw. Formnest |
| 7 | Angußöffnung |
| 8 | Medienblase |
| 8a, 8b | Medienblase |
| 9 | Abschnitt |
| 9a, 9b, 9c | Abschnitt |
| 10 | Kanal |
| 10a, 10b, 10c | Kanal |
| 11 | Medienblase |
| 11a, 11b, 11c | Medienblase |
| 12 | Kunststoff-Spritzgieß-Formteil |
| 13 | Kanal |
| 13a, 13b | Kanal |
| 14 | Kunststoff-Spritzgieß-Formteil |
| 15 | Kunststoff-Spritzgieß-Formteil |
| 16-16 | Trennebene |
| 17a, 17b | Angußkanal |
| 18a, 18b | Zweigkanal |
| 19 | Verteilkanal |
| 20 | Anschlußkanal |
| 21 | Kunststoff-Spritzgieß-Formteil |
| 22 | Wandungen |
| 23 | Hohlraum |
| 24 | Dicke/Mindestwanddicke |
| 25 | Formwerkzeug |
| 26 | Formnest bzw. Kavität |
| 27 | Angußöffnung |
| 30 | Kanal |
| 31 | Zusatzvolumen |
| 33 | Kanal |
| 34 | "verlorener Zapfen" |
| 35 | Dünnstelle |

**Patentansprüche**

1. Verfahren zum Spritzgießen von mit ihren Wandungen einen Hohlraum umschließenden Formteilen aus thermoplastischem Kunststoffmaterial, bei welchem die Kunststoffschmelze mit vorgegebener Menge in die Kavität bzw. in das Formnest eines Formwerkzeuges eingespritzt wird sowie währenddessen und/oder anschließend mit einem fluidischen Druckmedium beaufschlagt wird, damit die Kunststoffschmelze sich unter Hohlraumbildung längs der Wandungen der Kavität bzw. des Formnestes verteilt und an diese anlegt,
   **dadurch gekennzeichnet,**
   daß die Einspeisung des Druckmediums in die Kavität bzw. das Formnest (6) und in die Kunststoffschmelze zunächst im wesentlichen nur mit Fließrichtung der Kunststoffschmelze sowie mit einer Menge und/oder einem Druck vorgenommen wird (7; 13; 13a; 13b), durch welche bzw. welchen eine vom Fließwegende entfernt abschließende Medienblase (8; 8a; 8b) innerhalb der Kunststoffschmelze entsteht, und daß dann mit Zeitverzögerung vom Fließwegende her und im wesentlichen entgegengesetzt zur Fließrichtung der Kunststoffschmelze weiteres Druckmedium mit höherem bzw. erhöhtem Druckniveau in die Kavität bzw. das Formnest (6) und in die Kunststoffschmelze eingespeist wird (10; 10a; 10b; 10c) sowie dabei eine zweite Medienblase (11; 11a; 11b; 11c) gebildet und wenigstens annähernd mit der bereits bestehenden Medienblase (8; 8a; 8b) vereinigt wird.

2. Verfahren nach Anspruch 2,
   **dadurch gekennzeichnet,**
   daß die Verzögerungszeit zwischen den Druckmedien-Einspeisungen (7; 13; 13a; 13b und 10; 10a, 10b; 10a, 10b, 10c) variiert wird.

3. Verfahren nach einem der Ansprüche 1 und 2,
   **dadurch gekennzeichnet,**
   daß nach der Vereinigung der Druckmedien-Blasen (8; 8a, 8b und 11; 11a, 11b; 11a, 11b, 11c) das Nachdruck-Druckniveau bestimmt sowie anschließend aufrechterhalten wird.

4. Verfahren nach einem der Ansprüche 1 bis 3,
   **dadurch gekennzeichnet,**
   daß das mit Fließrichtung der Kunststoffschmelze wirkende Druckmedium (8; 8a, 8b) mit der Kunststoffschmelze - durch die Düse des Spritzgießaggregates - eingespeist wird (7).

5. Verfahren nach Anspruch 4,
   **dadurch gekennzeichnet,**
   daß die Kunststoffschmelze und das in deren Fließrichtung wirkende Druckmedium (8a, 8b) gleichzeitig an mehreren Stellen eingespeist werden.

6. Verfahren nach einem der Ansprüche 1 bis 3,
   **dadurch gekennzeichnet,**
   daß das mit Fließrichtung der Kunststoffschmelze wirkende Druckmedium (8; 8a, 8b) getrennt von dieser Kunststoffschmelze, aber angußnah in diese eingespeist wird (13; 13a, 13b).

7. Verfahren nach Anspruch 6,
   **dadurch gekennzeichnet,**
   daß die Kunststoffschmelze und das in deren Fließrichtung wirkende Druckmedium gleichzeitig an mehreren Stellen eingespeist werden (7a, 7b bzw. 13a, 13b).

8. Verfahren nach Anspruch 3,
   **dadurch gekennzeichnet,**
   daß das Nachdruck-Druckniveau nach der Vereinigung der beiden Medienblasen (8; 8a, 8b und 11; 11a, 11b bzw. 11a, 11b, 11c) variiert wird.

9. Formwerkzeug zur Durchführung des Verfahrens nach einem der Ansprüche 1 bis 8, bei dem fluidisches Druckmedium durch die an die Angußöffnung angelegte Spritzdüse des Spritzaggregates oder durch eine der Angußöffnung benachbarte Einspritzeinheit in die Kavität bzw. das Formnest einführbar ist,
   **dadurch gekennzeichnet,**
   daß mindestens eine Einspritzeinheit (10 bzw. 10a, 10b bzw. 10a, 10b, 10c bzw. 21a, 21b) für Druckmedium auch an das oder die von der Angußöffnung (7) entfernte(n) Ende(n) jeder Kavität bzw. jedes Formnestes (6) angeschlossen ist.

10. Formwerkzeug nach Anspruch 9, dadurch gekennzeichnet, daß die weitere Einspritzeinheit (33) an ein einen verlorenen Zapfen (34) am Kunststoff-Formteil (21) ausformendes Zusatzvolumen (31) des Formhohlraumes bzw. der Kavität (26) angeschlossen ist.

**Claims**

1. Method of injection moulding of moulded parts of thermoplastic plastics material enclosing a hollow space by their walls, in which the plastics material melt is injected by a predetermined quantity into the cavity or mould nest of a mould tool as well as is acted on by a fluid pressure medium during this/or subsequently, so that the plastics material melt is distributed along the walls of the cavity or mould nest while forming a hollow space and lies against these,
   characterized thereby that
   the feed of the pressure medium into the cavity or the mould nest (6) and into the plastics material melt is undertaken initially substantially only with the flow direction of the plastics material melt as well as with a quantity and/or a pressure (7; 13; 13a; 13b) by which a medium bubble (8; 8a; 8b), which terminates at a distance from the flow path end, is created within the plastics material melt, and that additional pressure medium with higher or increased pressure level is then - with a time delay and substantially in opposition to the flow direction of the plastics material melt - fed into the cavity or mould nest (6) and into the plastics material melt (10; 10a; 10b; 10c) as well as a second medium bubble (11; 11a; 11b; 11c) is formed in that case and at least approximately is combined with the already existing medium bubble (8; 8a; 8b).

2. Method according to claim 2, characterised thereby that the delay time between the pressure medium feeds (7; 13; 13a, 13b and 10; 10a, 10b; 10, 10b, 10c) is varied.

3. Method according to one of claims 1 and 2, characterised thereby that after the combining of the pressure medium bubbles (8a; 8a, 8b and 11; 11a, 11b; 11a, 11b, 11c) the pressure level of the after-pressure is determined and subsequently maintained.

4. Method according to one of claims 1 to 3, characterised thereby that the pressure medium (8; 8a, 8b) acting with the flow direction of the plastics material melt is fed together with the plastics material melt through the nozzles of the injection moulding unit.

5. Method according to claim 4, characterised thereby that the plastics material melt and the pressure medium (8a, 8b) acting in the flow direction thereof are fed at several places simultaneously.

6. Method according to one of claims 1 to 3, characterised thereby that the pressure medium (8; 8a, 8b) acting with the flow direction of the plastics material melt is fed separately from this plastics material melt, but into this near pouring-in gate.

7. Method according to claim 6, characterised thereby that the plastics material melt and the pressure medium acting in the flow direction thereof are fed at several places simultaneously (7a, 7b or 13a, 13b).

8. Method according to claim 3, characterised thereby that the pressure level of the after-pressure is varied after the combining of the two medium bubbles (8; 8a, 8b and 11; 11a, 11b or 11a, 11b, 11c).

9. Mould tool for carrying out the method according to one of the claims 1 to 8, in which fluid pressure medium is introduced into the cavity or the mould nest through the injection nozzle which is placed at the pouring-in gate opening of the injection unit or through an injection unit adjacent to the pouring-in gate opening,
characterized thereby that
that at least one injection unit (10 or 10, 10b or 10a, 10b, 10c or 21a, 21b) for the pressure medium is also connected to the end or ends which is or are spaced from the pouring-in gate opening (7) of each cavity or each mould nest (6).

10. Mould tool according to claim 9, characterized thereby that the further injection unit (33) is connected to an additional volume (31), which forms a "lost spigot" (34) at the plastics material mould part (21) of the hollow space or cavity (26).

**Revendications**

1. Procédé de moulage par injection de pièces en matière synthétique thermoplastique dont les parois enveloppent un espace creux, procédé dans lequel on injecte le bain de matière synthétique fondu selon une quantité prédéterminée dans la cavité ou le creux d'un moule, et on alimente simultanément et / ou ultérieurement un agent de pression fluide, pour que le bain de matière synthétique fondu se repartisse le long des parois de la cavité ou du creux du moule et s'applique contre celles-ci tout en formant un espace creux,
caractérisé

en ce qu'on effectue l'injection de l'agent de pression dans la cavité ou le creux de moule (6) et dans le bain de matière synthétique fondu d'abord essentiellement uniquement dans le sens d'écoulement du bain de matière synthétique fondu ainsi que selon une quantité et / ou une pression (7; 13; 13a; 13b) qui génère une bulle d'agent (8; 8a; 8b) à l'intérieur du bain de matière synthétique fondu, qui se termine à distance de l'extrémité du trajet d'écoulement, et

en ce qu'on injecte ensuite, moyennant un décalage dans le temps, en partant de l'extrémité du trajet d'écoulement et essentiellement en sens opposé au sens d'écoulement du bain de matière synthétique fondu, de l'agent de pression supplémentaire à pression accrue dans la cavité ou le creux (6) du moule et le bain de matière synthétique fondu (10; 10a; 10b; 10c) et on forme ainsi une deuxième bulle d'agent (11; 11a; 11b; 11c) qui au moins approximativement se réunit avec la bulle d'agent déjà existante (8; 8a; 8b).

2. Procédé selon la revendication 1

caractérisé en ce qu'on fait varier le temps de décalage entre les injections d'agent de pression (7;13;13a,13b et 10; 10a, 10b; 10a, 10b, 10c).

3. Procédé selon l'une des revendications 1 et 2 caractérisé en ce qu'on détermine le niveau de pression pour la pression de maintien après la réunification des bulles d'agent de pression (8:8a,8b et 11; 11a, 11b; 11a, 11b, 11c) et on le maintient ensuite.

4. Procédé selon l'une des revendications 1 à 3 caractérisé en ce qu'on injecte (7) l'agent de pression (8;8a,8b) qui agit dans le sens d'écoulement du bain de matière synthétique fondu, avec ledit bain de matière synthétique fondu au travers de la buse du dispositif de moulage par injection.

5. Procédé selon la revendication 4 caractérisé en ce qu'on injecte le bain de matière synthétique fondu ainsi que l'agent de pression agissant dans la direction d'écoulement de celui-ci, simultanément à plusieurs endroits.

6. Procédé selon l'une des revendications 1 à 3 caractérisé en ce qu'on injecte l'agent de pression (8; 8a,8b) qui agit dans le sens d'écoulement du bain de matière synthétique fondu, séparément de ce bain de matière synthétique fondu, mais à proximité du culot d'injection (13;13a,13b).

7. Procédé selon la revendication 6 caractérisé en ce qu'on injecte le bain de matière synthétique fondu ainsi que l'agent de pression agissant dans la direction d'écoulement de celui-ci, simultanément à plusieurs endroits.

8. Procédé selon la revendication 3 caractérisé en ce qu'on fait varier le niveau de pression de la pression de maintien après réunion des deux bulles d'agent (8;8a,8b et 11;11a,11b ou 11a,11b,11c).

9. Outil de moulage pour la mise en oeuvre du procédé selon l'une des revendications 1 à 8, dans lequel un agent de pression fluide est injectable dans la cavité ou le creux du moule par la buse d'injection du dispositif d'injection associé au culot d'injection ou par une unité d'injection agencée à proximité du culot d'injection, caractérisé

en ce qu'au moins une unité d'injection (10 ou 10a; 10b ou 10a;10b; 10c ou 21a, 21b) d'agent de pression est également raccordée à l'extrémité éloignée ou aux extrémités éloignées du culot d'injection (7) de chaque cavité ou creux de moule (6).

10. Outil de moulage selon la revendication 9, caractérisé

en ce que l'unité d'injection supplémentaire (33) est raccordée à un volume supplémentaire (31) de la cavité ou du creux de moule (26) qui constitue un "tenon perdu" (34) de la pièce moulée en matière synthétique (21).

## Fig.1

## Fig.2

## Fig.3

## Fig.4

Fig.5

Fig.6

Fig.7

Fig.8

## Fig. 9

## Fig. 10

# Fig.11

10a
11a

10b
11b

14

8a  13a  7a  6  7b  13b  8b

# Fig.12

10a

10b

14

13a  7a  3  6  7b  13b

Fig.13

Fig.14

Fig.15

Fig.16

Fig.17

Fig.18

Fig.19

## Fig. 20

## Fig. 22

## Fig. 21

Fig.23

P₁

a)

P₂

Fig.24

P₁

b)

P₂

Fig. 25